# EUROPEAN PATENT APPLICATION

(11) **EP 3 518 491 A1**
(43) Date of publication of application: **31.07.2019**
(21) Application number: 18153636.8
(22) Date of filing: 26.01.2018
(51) Int. Cl.: H04L 29/06, H04W 84/04, H04W 12/06, H04W 12/02

(54) **REGISTERING OR AUTHENTICATING USER EQUIPMENT TO A VISITED PUBLIC LAND MOBILE NETWORK**

(71) Applicant: Nokia Technologies Oy, 02610 Espoo (FI)
(72) Inventor: Jerichow, Anja, 85567 Grafing (DE)
(74) Representative: Espatent Oy

(57) **Abstract**

A method for registering or authenticating user equipment to a visited public land mobile network, VPLMN is disclosed that includes: receiving by the user equipment from the VPLMN a selection definition of one or more input parameters including the long-term identifier; producing at the user equipment a concealed identifier that comprises a replay attack protector and the input parameters encrypted to be decryptable by a home public land mobile network, HPLMN; producing at the user equipment a freshness code comprising a hash result of hash source data comprising all of the concealed identifier; the one or more input parameters according to the selection definition; and a replay attack protector; and sending by the user equipment to the VPLMN the freshness code; and the concealed identifier.

## Description

### TECHNICAL FIELD

The present application generally relates to registering or authenticating user equipment to a visited public land mobile network. In particular, though not exclusively, the present application relates to lawful interception in visited networks.

### BACKGROUND

This section illustrates useful background information without admission of any technique described herein representative of the state of the art.

Public Land Mobile Networks (PLMN) have greatly evolved during past decades from rudimentary voice communication enablers to mobile broadband Internet devices. Currently, a fifth generation of mobile networks is being designed e.g. by further developing the Long-Term Evolution (LTE). Voice and data communications are encrypted for maintenance of privacy of the users in all countries save few exceptions. However, there is a need to enable societies to protect themselves or investigate crimes by means of legal interception in which legal authorities are allowed to receive communication of an intercepted subscriber without normal encryption of the PLMN.

In mobile communications, there are typically two independent identities for each subscriber: an identifier of the User Equipment (UE) that identifies e.g. a phone make and model, and a subscription identity that identifies a particular subscription of a PLMN. Typical examples of the UE and subscription identifiers are an International Mobile Equipment Identity (IMEI) or a Permanent Equipment Identifier (PEI) and an International Mobile Subscriber Identity (IMSI). Each mobile phone user, or mobile broadband device, needs to pay for the service and the subscription assigns the costs of the use to the respective pre-payments or credit contract made by a payee. Moreover, the subscription determines a phone number in use so that the user of the subscription and only that user should be able to place calls and receive calls with that phone number. As of GSM, the subscription and UE identifications have been separate so that different subscriptions can be used in one UE and vice versa. The UE identification helps to recover stolen mobile phones, for example.

Mobile communications impose particular challenges for authenticating the true subscriber, which is important both for authenticating a subscriber to avoid abuse of a subscription of someone else and also for the lawful interception. It is yet desirable to avoid over-the-air exchange of any long-term subscriber identity of the subscription at all by use of a temporary subscriber identity to further improve privacy of the users. Thus, the long-term subscriber identity is replaced by the temporary subscriber identity as soon as initial registration of the subscriber is completed. The temporary subscriber identity is only known by the visited PLMN, i.e. VPLMN, and the subscriber's subscription module. However, in mobile communication the concealing of the subscriber identity prevents lawful interception of that subscriber in particular.

For lawful interception, it suffices if any long-term identifier is known relating to the UE used for communication. The UE identity such as the IMEI (International Mobile Equipment Identity) or PEI (permanent equipment identifier) in 5G and/or the subscriber identity such as the IMSI or MISISDN (Mobile Station International ISDN Number) or SUPI (Subscription Permanent Identifier) in 5G networks can be used to target lawful interception as desired. A long-term identifier is used in this document generally for reference to any identifier with which legal interception can be targeted to a desired user equipment or subscription. A concealed identifier is used in this document generally for reference to any identifier that is configured to indicate the long-term identifier in a concealed manner hindering third parties from determining the long-term identifier.

Various solutions have been proposed for indicating the long-term identifier to the VPLMN. These solutions require either or both entrusting the VPLMN to perform the authentication of the UE and sending an additional pair of radio messages in order to verify the long-term identifier of the UE so that availability of lawful interception could be verified at the VPLMN, and all these solutions are inoperable if the VPLMN refuses to register or authenticate the UE to an encrypted long-term identifier.

### SUMMARY

Various aspects of examples of the invention are set out in the claims.

According to a first example aspect of the present invention, there is provided a method for registering or authenticating user equipment to a visited public land mobile network, VPLMN, comprising:
receiving by the user equipment from the VPLMN a selection definition of one or more input parameters including the long-term identifier;
producing at the user equipment a concealed identifier that comprises a replay attack protector and the input parameters encrypted to be decryptable by a home public land mobile network, HPLMN;
producing at the user equipment a freshness code comprising a hash result of hash source data comprising all of the concealed identifier; the one or more input parameters according to the selection definition; and a replay attack protector; and
sending by the user equipment to the VPLMN the freshness code; and the concealed identifier.

The input parameters may comprise any one or more of: a subscriber identity; an international mobile subscriber identity; a subscription permanent identifier; a mobile station international ISDN number; a user equipment identity such as an international mobile equipment identity or a permanent equipment identifier. Alternatively, the long-term identifier may be a subscriber identity; an international mobile subscriber identity; a subscription permanent identifier; a subscription permanent identifier; or a mobile station international ISDN number and the input parameters may comprise an international mobile equipment identity or a permanent equipment identifier.

The method may comprise performing the sending by the user equipment to the VPLMN the freshness code in a registering or an authentication response or in a Network Access Stratum (NAS) Security Mode Command (SMC) complete message. The sending of the authentication response or NAS SMC complete message may relate to authenticating the user equipment to the VPLMN. The registering message may be an attach request message. The registering message may be transmitted by the user equipment to the VPLMN before any radio bearer encryption information has been received by the user equipment from the VPLMN, such as a challenge of an authentication vector.

The cryptographic hash function may be a public cryptographic hash function. The cryptographic hash function may be a one-way hash function. The cryptographic hash function may be or employ any one or more of: a universal hash function; a keyed cryptographic hash function; and an unkeyed cryptographic hash function.

The method may comprise transfer of the replay attack protector between the VPLMN and the user equipment only with cryptographic protection resulting from encryption or cryptographic hashing.

The replay attack protector may be independently generated at the user equipment. The replay attack protector may be randomized at the user equipment. The replay attack protector may be randomized by the user equipment. The replay attack protector may be randomized by a subscriber identity module accessible by the user equipment. The replay attack protector may be configured to prevent re-use of earlier captured messages by third parties. The replay attack protector may comprise an arbitrary code for using only once. The replay attack protector may be configured to be used more than once by the user equipment by a likelihood less than once per million replay attack protectors. The replay attack protector may comprise a sequential counter maintained by the user equipment. The replay attack protector may comprise a time value expressed as a number of time intervals starting of a given date and time such as seconds elapsed since a given date and time.

The concealed identifier may be encrypted with a shared secret of the user equipment and the HPLMN.

According to a second example aspect of the present invention, there is provided a method for registering or authenticating user equipment to a visited public land mobile network, VPLMN, comprising:
sending by the VPLMN to the user equipment a selection definition of one or more input parameters including the long-term identifier;
receiving by the VPLMN from the user equipment a freshness code; and the concealed identifier; wherein the concealed identifier comprises a replay attack protector and the input parameters encrypted to be decryptable by a home public land mobile network, HPLMN; and the freshness code comprising a hash result of hash source data comprising all of the concealed identifier; the one or more input parameters according to the selection definition; and a replay attack protector;
sending by the VPLMN the concealed identifier to the HPLMN; and
receiving by the VPLMN from the HPLMN the replay attack protector and the one or more input parameters;
computing by the VPLMN a local version of the freshness code using the replay attack protector and the one or more input parameters received from the VPLMN and the concealed identifier received from the user equipment;
verifying if the local version of the freshness code matches with the freshness code received from the user equipment and if yes:
using the long-term identifier received from the VPLMN to register or authenticate the user equipment to the VPLMN; and otherwise refusing to register or authenticate the user equipment to the VPLMN.

According to a third example aspect of the present invention, there is provided a method for enabling by a home public land mobile network, HPLMN, registering or authenticating user equipment to a visited public land mobile network, VPLMN, the method comprising:
receiving by the HPLMN from the VPLMN a long-term identifier request for a long-term identifier of the user equipment, the long-term identifier request comprising a concealed identifier that is concealed from others by encryption decryptable by the HPLMN; and
providing the VPLMN with the long-term identifier; replay attack protector and the one or more input parameters.

According to a fourth example aspect of the present invention, there is provided a mobile terminal comprising user equipment configured to perform registering or authenticating to a visited public land mobile network, VPLMN, comprising:
at least one memory;
a communication circuitry; and
at least one processor configured to perform the method of the first example aspect using the at least one memory and the communication circuitry.

According to an fifth example aspect of the present invention, there is provided a network element for a visited public land mobile network, VPLMN, for registering or authenticating user equipment to the VPLMN and comprising:
a communication interface for communicating with the user equipment and for communicating with a home public land mobile network, HPLMN;
at least one memory for storing information; and
at least one processor configured, with the at least one memory and the communication interface, to perform the method of the second example aspect.

According to a sixth example aspect of the present invention, there is provided a network element for a home public land mobile network, HPLMN, for enabling a user equipment to register or authenticate to a visited public land mobile network, VPLMN, comprising:
a communication interface for communicating with the VPLMN;
at least one memory for storing information; and
at least one processor configured, with the at least one memory and the communication interface, to perform the method of the third example aspect.

According to a seventh example aspect of the present invention, there is provided a computer program comprising computer executable program code configured cause user equipment to execute the method of the first example aspect.

According to an eighth example aspect of the present invention, there is provided a computer program comprising computer executable program code configured to cause a network element for a visited public land mobile network, VPLMN to execute the method of the second example aspect.

According to a ninth example aspect of the present invention, there is provided a computer program comprising computer executable program code configured to cause a network element for a home public land mobile network, HPLMN to execute the method of the third example aspect.

The computer program of any example aspect may be stored in a computer readable memory medium.

Any foregoing memory medium may comprise a digital data storage such as a data disc or diskette, optical storage, magnetic storage, holographic storage, optomagnetic storage, phase-change memory, resistive random access memory, magnetic random access memory, solid-electrolyte memory, ferroelectric random access memory, organic memory or polymer memory. The memory medium may be formed into a device without other substantial functions than storing memory or it may be formed as part of a device with other functions, including but not limited to a memory of a computer, a chip set, and a sub assembly of an electronic device. The memory medium may be a non-transitory memory medium.

Different non-binding example aspects and embodiments of the present invention have been illustrated in the foregoing. The embodiments in the foregoing are used merely to explain selected aspects or steps that may be utilized in implementations of the present invention. Some embodiments may be presented only with reference to certain example aspects of the invention. It should be appreciated that corresponding embodiments may apply to other example aspects as well.

### BRIEF DESCRIPTION OF THE DRAWINGS

For a more complete understanding of example embodiments of the present invention, reference is now made to the following descriptions taken in connection with the accompanying drawings in which:
Fig. 1 shows an architectural drawing of a system of an example embodiment;
Fig. 2 shows a flow chart of a process of an example embodiment;
Fig. 3 shows a block diagram of an apparatus of an example embodiment; and
Fig. 4 shows a block diagram of another apparatus of an example embodiment.

### DETAILED DESCRIPTON OF THE DRAWINGS

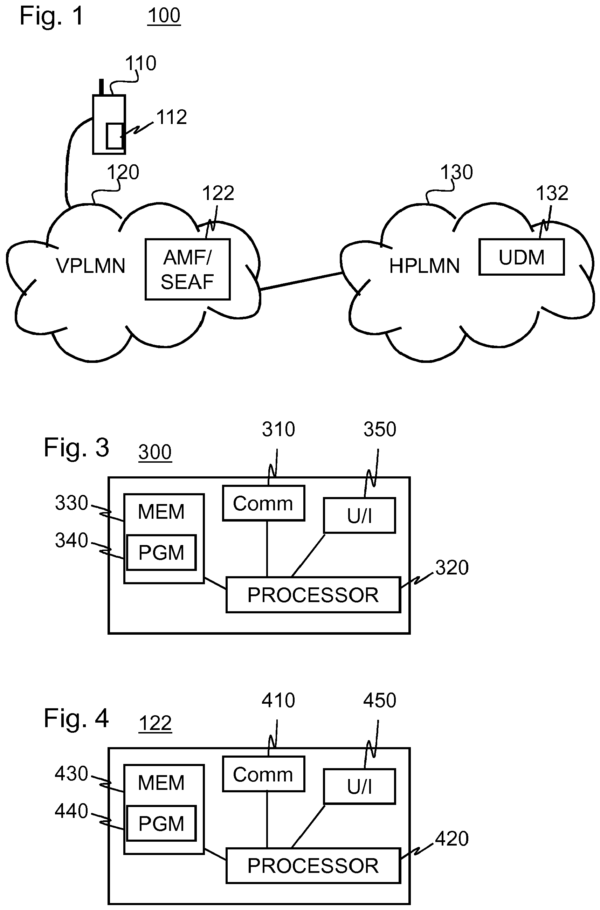

An example embodiment of the present invention and its potential advantages are understood by referring to Figs. 1 through 4 of the drawings. In this document, like reference signs denote like parts or steps.

Fig. 1 shows an architectural drawing of a system 100 of an example embodiment. The system 100 comprises User Equipment (UE) 110 that includes a subscriber module 112 (e.g. a SIM or USIM) either as a hardware or software implemented function. It is irrelevant for many embodiments of the present invention whether particular operation at the UE 110 is performed purely by a User Equipment when understood without the subscriber module 112, by the subscriber module 112, or collectively by the UE 110 and the subscriber module 112. In sake of simplicity, action at the UE 110 may be described with an intent to cover acts taken by either or both the UE 110 and the subscriber module 112.

The system 100 further comprises a Visited Public Land Mobile Network (VPLMN) 120 that includes a network element 122 such as Core Access and Mobility Management Function (AMF) or a security anchor function (SEAF). Notice that the network element 122 need not be solely for performing the functions disclosed herein but the network element 122 may further be configured to perform various other functions. In practice, the network element 122 may be formed of one or more parts of the VPLMN 120 and/or software run by the VPLMN. Hence, the network element 122 should be understood broadly.

The system 100 further comprises a Home Land Mobile Network (HPLMN) 130. The HPLMN comprises in an example embodiment a Unified Data Management (UDM) function 132.

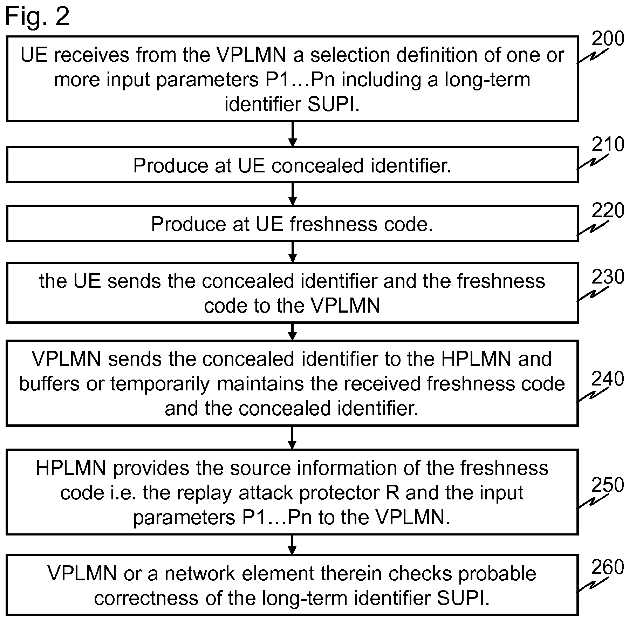

The terms visited and home Land Mobile Network refer to the role of the network in question with regard to the UE 110 or more particularly with regard to the subscription of the UE 112. The Land Mobile Network whose subscriber the UE 110 is (e.g. based on its current subscriber module 112) is denoted as the HPLMN and a Land Mobile Network to which the UE 110 has roamed is denoted as the VPLMN. At any one time, typical Land Mobile Networks act for some subscribers as the HPLMN and for some other subscribers as the VPLMN. Fig. 2 shows a flow chart of a process of an example embodiment.

In step 200, a the User Equipment 110 receives from the VPLMN 120 a selection definition of one or more input parameters P1...Pn including a long-term identifier SUPI.

In step 210, a concealed identifier SUCI is produced at the User Equipment 110, optionally within a subscriber module using the long-term identifier SUPI e.g. as SUCI = PK_{HPLMN}(R, P1...Pn) in any order and the one or more input parameters as further input for the encryption, when one of the input parameters is SUPI. In order to allow conveying of previously unspecified different ones of the input parameters, in one example embodiment, a given order is specified for the input parameters. In another example embodiment, an input parameter indicator is used in encrypting the concealed identifier. The denotation PK_{HPLMN}() indicates encryption of the parameters indicated within parenthesis using an encryption key PK_{HPLMN} of the HPLMN. R designates a replay attack protector such as a cryptographic nonce, e.g. an arbitrary or random number or code.

In step 220, either simultaneously or before or after the producing the concealed identifier, a freshness code is produced by the UE 110 or the subscriber module 112. The freshness code is in an example embodiment a cryptographic hash of the replay attack protector R, the concealed identifier, and the input parameters, e.g. as hxres=H(SUCI, R, P1...Pn) in any order. The Expected hash response hxres is included in an initial registration or an authentication response or in a NAS SMC complete message of the UE 110 in an example embodiment. H denotes a cryptographic hash function configured to hinder determination of source information from the result of the hash code.

Notice that in the encryption and hashing examples of preceding paragraphs, parameters were jointly used as a source of a cryptographic function (encryption or hashing). Comma as a delimiter is only intended to distinguish the different parameters, but these parameters can be combined in any manner and order as per implementation. For example, the parameters can be concatenated, or each character can be summed up and optionally a modulo of e.g. 255 can be taken, and/or the parameters can be combined with XOR etc. Furthermore, truncation can be freely applied to reduce length or computational burden in any of the input parameters or results of functions.

In step 230, the UE 110 sends the concealed identifier and the freshness code to the VPLMN 120, for example to the network element 122.

In step 240, the VPLMN 120 sends the concealed identifier to the HPLMN 130 and buffers or temporarily maintains the received freshness code and the concealed identifier. In an example embodiment, the following steps that are performed in the HPLMN are performed by a Unified Data Management (UDM) function of the HPLMN.

In step 250, the HPLMN 130 provides the source information of the freshness code i.e. the replay attack protector R and the input parameters P1...Pn to the VPLMN 120, e.g. to the network element 122, including the long-term identifier SUPI for lawful interception (LI) use, for example.

In step 260, the VPLMN 120 or therein the network element 122 checks probable correctness of the long-term identifier SUPI. If the HPLMN is truthful, calculation of local version of freshness code hxres matches that stored in step 240 and the VPLMN 120 may continue registering or authenticating of the UE 110, otherwise the VPLMN 120 may reject the registering or authentication request of the UE 110.

Fig. 3 shows a block diagram of an apparatus 300 such as a public land mobile network terminal according to an embodiment of the invention.

The apparatus 300 comprises a memory 330 including a persistent computer program code 340. The apparatus 300 further comprises a processor 320 for controlling the operation of the apparatus 300 using the computer program code 340, a communication unit 310 for communicating with various local devices and with the public land mobile networks. The communication unit 310 comprises, for example, a local area network (LAN) port; a wireless local area network (WLAN) unit; Bluetooth unit; cellular communication unit; or satellite communication unit. The processor 320 comprises, for example, any one or more of: a master control unit (MCU); a microprocessor; a digital signal processor (DSP); an application specific integrated circuit (ASIC); a field programmable gate array; and a microcontroller. The apparatus 300 optionally comprises a user interface 350.

Fig. 4 shows a block diagram of the network element 122 according to an embodiment of the invention for use in the VPLMN 120 or in the HPLMN 130. The network element may be formed of a server computer and suitable software. The network element 122 may comprise parallel components for improving resilience and/or speed of the network element 122.

The network element 122 comprises a memory 430 including a persistent computer program code 440. The network element 122 further comprises a processor 420 for controlling the operation of the network element 122 using the computer program code 440, a communication unit 410 for communicating with other networks and user equipment. The network element 122 optionally comprises a user interface 450. The communication unit 410 comprises, for example, one or more local area network (LAN) ports. The processor 420 comprises, for example, any one or more of: a master control unit (MCU); a microprocessor; a digital signal processor (DSP); an application specific integrated circuit (ASIC); a field programmable gate array; and a microcontroller.

Without in any way limiting the scope, interpretation, or application of the claims appearing below, a technical effect of one or more of the example embodiments disclosed herein is that possibility for lawful interception in a visited public land mobile network can be verified with fair degree of reliability with little computational cost and without need for new radio message signals over downlink. Another technical effect of one or more of the example embodiments disclosed herein is that the possibility of lawful interception may be tested so that the association of the long-term identifier and the concealed identifier is verifiable without need to transfer the long-term identifier over air interface without encryption even before any encrypted radio bearer is formed for the UE by the VPLMN, i.e. when transferring the freshness code in the registration or an authentication response or in a NAS SMC complete message. Yet further technical effect is that the VPLMN may identify a target through the long-term identifier, even though in the first moment only a concealed identifier is visible to the VPLMN or its AMF, i.e. when UE registers with or authenticates to the VPLMN using a SUCI that is encrypted to be unreadable by the VPLMN. Yet further technical effect is that the UE need not rely on predefined lists of trusted VPLMNs and the HPLMN can react fast if some VPLMN loses trust of the HPLMN by no longer providing the VPLMN in question with the long-term identifiers for the subscribers of the HPLMN.

Embodiments of the present invention may be implemented in software, hardware, application logic or a combination of software, hardware and application logic. The software, application logic and/or hardware may reside entirely or in part on a memory of the apparatus 300 or the network element 122. In an example embodiment, the application logic, software or an instruction set is maintained on any one of various conventional computer-readable media. In the context of this document, a "computer-readable medium" may be any non-transitory media or means that can contain, store, communicate, propagate or transport the instructions for use by or in connection with an instruction execution system, apparatus, or device, such as a computer, with one example of a computer described and depicted in Fig. 4. A computer-readable medium may comprise a computer-readable storage medium that may be any media or means that can contain or store the instructions for use by or in connection with an instruction execution system, apparatus, or device, such as a computer.

If desired, the different functions discussed herein may be performed in a different order and/or concurrently with each other. Furthermore, if desired, one or more of the before-described functions may be optional or may be combined. For example, if desired, the freshness code can also be provided at other messages than the registering message.

Although various aspects of the invention are set out in the independent claims, other aspects of the invention comprise other combinations of features from the described embodiments and/or the dependent claims with the features of the independent claims, and not solely the combinations explicitly set out in the claims.

It is also noted herein that while the foregoing describes example embodiments of the invention, these descriptions should not be viewed in a limiting sense. Rather, there are several variations and modifications which may be made without departing from the scope of the present invention as defined in the appended claims.

## Claims

1. A method for registering or authenticating user equipment to a visited public land mobile network, VPLMN, comprising:
receiving by the user equipment from the VPLMN a selection definition of one or more input parameters including the long-term identifier;
producing at the user equipment a concealed identifier that comprises a replay attack protector and the input parameters encrypted to be decryptable by a home public land mobile network, HPLMN;
producing at the user equipment a freshness code comprising a hash result of hash source data comprising all of the concealed identifier; the one or more input parameters according to the selection definition; and a replay attack protector; and
sending by the user equipment to the VPLMN the freshness code; and the concealed identifier.

2. A method for registering or authenticating user equipment to a visited public land mobile network, VPLMN, comprising:
sending by the VPLMN to the user equipment a selection definition of one or more input parameters including the long-term identifier;
receiving by the VPLMN from the user equipment a freshness code; and the concealed identifier; wherein the concealed identifier comprises a replay attack protector and the input parameters encrypted to be decryptable by a home public land mobile network, HPLMN; and the freshness code comprising a hash result of hash source data comprising all of the concealed identifier; the one or more input parameters according to the selection definition; and a replay attack protector;
sending by the VPLMN the concealed identifier to the HPLMN; and
receiving by the VPLMN from the HPLMN the replay attack protector and the one or more input parameters;
computing by the VPLMN a local version of the freshness code using the replay attack protector and the one or more input parameters received from the VPLMN and the concealed identifier received from the user equipment;
verifying if the local version of the freshness code matches with the freshness code received from the user equipment and if yes:
using the long-term identifier received from the VPLMN to register with or authenticate the user equipment to the VPLMN; and otherwise refusing to register with or authenticate the user equipment to the VPLMN.

3. The method of claim 1 or 2, wherein the freshness code is transferred from the user equipment to the VPLMN in a registering message, an authentication response or a NAS SMC complete message.

4. The method of any one of preceding claims, wherein the replay attack protector is transferred between the VPLMN and the user equipment only with cryptographic protection resulting from encryption or cryptographic hashing.

5. A method for enabling by a home public land mobile network, HPLMN, registering with or authenticating of user equipment to a visited public land mobile network, VPLMN, the method comprising:
receiving by the HPLMN from the VPLMN a long-term identifier request for a long-term identifier of the user equipment, the long-term identifier request comprising a concealed identifier that is concealed from others by encryption decryptable by the HPLMN; and
providing the VPLMN with the long-term identifier; replay attack protector and the one or more input parameters.

6. The method of any one of preceding claims, wherein the input parameters comprise any one or more of: a subscriber identity; an international mobile subscriber identity; a subscription permanent identifier; a mobile station international ISDN number; a user equipment identity; an international mobile equipment identity; a permanent equipment identifier.

7. The method of any one of claims 1 to 5, wherein the long-term identifier is a subscriber identity; an international mobile subscriber identity; a subscription permanent identifier; or a mobile station international ISDN number and the input parameters comprise an international mobile equipment identity or a permanent equipment identifier.

8. The method of any one of preceding claims, wherein the concealed identifier is encrypted with a shared secret of the user equipment and the HPLMN.

9. A mobile terminal comprising user equipment configured to perform registering with or authenticating to a visited public land mobile network, VPLMN, comprising:
at least one memory;
a communication circuitry; and
at least one processor configured using the at least one memory and the communication circuitry to perform:
receiving by the user equipment from the VPLMN a selection definition of one or more input parameters including the long-term identifier;
producing at the user equipment a concealed identifier that comprises a replay attack protector and the input parameters encrypted to be decryptable by a home public land mobile network, HPLMN;
producing at the user equipment a freshness code comprising a hash result of hash source data comprising all of the concealed identifier; the one or more input parameters according to the selection definition; and a replay attack protector; and
sending by the user equipment to the VPLMN the freshness code; and the concealed identifier.

10. The mobile terminal of claim 9, the at least one processor being configured to cause transferring the freshness code from the user equipment to the VPLMN in a registering message or an authentication response or in a NAS SMC complete message.

11. The mobile terminal of claim 9 or 10, the at least one processor being configured to cause transferring the replay attack protector between the VPLMN and the user equipment only with cryptographic protection resulting from encryption or cryptographic hashing.

12. The mobile terminal of any one of claims 9 to 11, wherein the long-term identifier is a subscriber identity; an international mobile subscriber identity; a subscription permanent identifier; or a mobile station international ISDN number and the input parameters comprise an international mobile equipment identity or a permanent equipment identifier.

13. The method of any one of preceding claims, wherein the concealed identifier is encrypted with a shared secret of the user equipment and the HPLMN.

14. A network element for a visited public land mobile network, VPLMN, for registering or authenticating user equipment to the VPLMN and comprising:
a communication interface for communicating with the user equipment and for communicating with a home public land mobile network, HPLMN;
at least one memory comprising computer program code; and
at least one processor configured to cause the VPLMN, when executing the computer program code, to perform the method of any one of claims 2 to 4.

15. A network element for a home public land mobile network, HPLMN, for enabling a user equipment to register or authenticate to a visited public land mobile network, VPLMN, comprising:
a communication interface for communicating with the VPLMN;
at least one memory for storing information; and
at least one processor configured, with the at least one memory and the communication interface, to perform the method of any one of claims 5 to 8.
